# EUROPEAN PATENT APPLICATION

(11) **EP 4 806 573 A1**
(43) Date of publication of application: **16.09.2026**
(21) Application number: 24918367.4
(22) Date of filing: 30.12.2024
(51) Int. Cl.: B23D 47/00

(54) **MULTIFUNCTIONAL ELECTRIC TOOL**

(30) Priority: 15.01.2024 CN 202410056874
(71) Applicant: Nanjing Chervon Industry Co., Ltd., Nanjing, Jiangsu 211106 (CN)
(72) Inventor: ZHANG, Yi, Nanjing, Jiangsu 211106 (CN); WANG, Rong, Nanjing, Jiangsu 211106 (CN)
(74) Representative: Sun, Yiming
(86) International application number: PCT/CN2024/143849
(87) International publication number: WO 2025/152759

(57) **Abstract**

A multi-function power tool includes a housing (100) and a power mechanism (200). The housing (100) includes a front portion (110) and a grip (120). The power mechanism (200) includes an output assembly (210) and an electric motor (220). The output assembly (210) includes a first output shaft (211) and a second output shaft (212). The first output shaft (211) is configured to be mounted with and drive a first attachment (400), and the second output shaft (212) is configured to be mounted with and drive a second attachment (500). The electric motor (220) includes a motor shaft (221) that drives the first output shaft (211) and the second output shaft (212). At least one of the first output shaft (211) and the second output shaft (212) is substantially parallel to the motor shaft (221).

## Description

This application claims priority to Chinese Patent Application No. 202410056874.2 filed with the China National Intellectual Property Administration (CNIPA) on Jan. 15, 2024, the disclosure of which is incorporated herein by reference in its entirety.

### TECHNICAL FIELD

The present application relates to the technical field of power tools, for example, a multi-function power tool.

### BACKGROUND

Multi-function power tools are highly practical in daily life and enjoy popularity because they enable tool combinations to be changed conveniently and quickly. Multi-function power tools use a more flexible high-frequency oscillating cutting mechanism and can be used in combination with saw blades, oscillating scrapers, triangular sanding pads, and other attachments to implement vertical cutting, cutting without dead angles, grinding, scraping, cutting, and other practical functions. However, multi-functional tools in the related art generally do not have a long-distance cutting function and still have problems of fewer functions and inconvenience to use.

This part provides background information related to the present application, and the background information is not necessarily the existing art.

### SUMMARY

An object of the present application is to solve or at least alleviate part or all of the preceding problems. To this end, the present application provides a multi-function power tool. To achieve the preceding object, the present application adopts the technical solutions described below.

A multi-function power tool includes: a housing including a front portion and a grip; and a power mechanism including an output assembly and an electric motor. The output assembly includes a first output shaft and a second output shaft. The first output shaft is configured to be mounted with and drive a first attachment, and the second output shaft is configured to be mounted with and drive a second attachment. The electric motor has a motor shaft that drives the first output shaft and the second output shaft, and at least one of the first output shaft and the second output shaft is substantially parallel to the motor shaft.

In some examples, the motor shaft, the first output shaft, and the second output shaft are substantially parallel.

In some examples, the motor shaft, the first output shaft, and the second output shaft extend toward the same side of the housing.

In some examples, the electric motor is disposed in the front portion.

In some examples, the grip has a grip axis, and the motor shaft is substantially perpendicular to the grip axis.

In some examples, the first output shaft and the second output shaft are distributed on a front side of the motor shaft and a rear side of the motor shaft along a front and rear direction of the housing.

In some examples, the power mechanism further includes a first transmission assembly, and the motor shaft transmits power to the first output shaft through the first transmission assembly.

In some examples, the power mechanism further includes a second transmission assembly, and the motor shaft transmits power to the second output shaft through the second transmission assembly.

In some examples, the power mechanism further includes an intermediate shaft, the intermediate shaft is connected to the motor shaft, and the first transmission assembly and the second transmission assembly share the intermediate shaft.

In some examples, the intermediate shaft includes an eccentric shaft section and a concentric shaft section, the eccentric shaft section is eccentrically disposed relative to the motor shaft, and the concentric shaft section is concentrically disposed with the motor shaft.

In some examples, the first transmission assembly is connected to the eccentric shaft section to convert rotation of the motor shaft into a swing of the first output shaft, and the second transmission assembly is connected to the concentric shaft section to convert rotation of the motor shaft into rotation of the second output shaft.

In some examples, the intermediate shaft further includes a connecting section connected to the motor shaft.

In some examples, the first output shaft is an oscillating output shaft, and/or the second output shaft is a rotating output shaft.

In some examples, the second attachment is a circular saw attachment.

In some examples, the circular saw attachment includes a saw blade, a shield, and an attachment shaft, the attachment shaft is rotatably connected to the shield, the saw blade is mounted on the attachment shaft, and an end of the attachment shaft facing away from the saw blade is connected to the second output shaft.

In some examples, the attachment shaft is rotatably connected to the shield through an attachment bearing.

In some examples, the circular saw attachment further includes a base plate, and the base plate is connected to the shield.

A multi-function power tool includes: a housing including a front portion and a grip; and a power mechanism including an output assembly and an electric motor. The electric motor is disposed in the front portion. The output assembly includes a first output shaft and a second output shaft. The first output shaft is configured to be mounted with and drive a first attachment, and the second output shaft is configured to be mounted with and drive a second attachment. The electric motor has a motor shaft that drives the first output shaft and the second output shaft.

In some examples, an included angle between the first output shaft and the motor shaft is 3° to 30°.

In some examples, at least one of the first output shaft and the second output shaft is substantially parallel to the motor shaft.

In some examples, the motor shaft, the first output shaft, and the second output shaft are substantially parallel.

In some examples, the first output shaft is an oscillating output shaft, the power mechanism further includes a first transmission assembly, and the motor shaft transmits power to the first output shaft through the first transmission assembly to drive the first output shaft to swing.

In some examples, the power mechanism further includes an intermediate shaft, and the intermediate shaft includes a connecting section and an eccentric shaft section. The connecting section is connected to the motor shaft. The eccentric shaft section is eccentrically disposed relative to the motor shaft. The first transmission assembly is connected to the eccentric shaft section.

In some examples, the first transmission assembly includes a shift fork bearing and a shift fork. The shift fork bearing is sleeved on the eccentric shaft section. The shift fork is connected to the first output shaft. The shift fork is provided with a U-shaped opening at one end, and the shift fork bearing is disposed in the U-shaped opening.

In some examples, the multi-function power tool further includes a quick clamping mechanism, where the quick clamping mechanism is operable by a user to detach or mount the first attachment.

In some examples, the second output shaft is a rotating output shaft, the power mechanism further includes a second transmission assembly, and the motor shaft transmits power to the second output shaft through the second transmission assembly to drive the second output shaft to rotate.

A multi-function power tool includes: a housing including a front portion and a grip; and a power mechanism including an output assembly and an electric motor. The output assembly includes a first output shaft and a second output shaft. The first output shaft is an oscillating output shaft and is configured to be mounted with and drive a first attachment, and the second output shaft is configured to be mounted with and drive a second attachment. The electric motor has a motor shaft that drives the first output shaft and the second output shaft. A transmission ratio from the motor shaft to the first output shaft is defined as a first transmission ratio. A transmission ratio from the motor shaft to the second output shaft is defined as a second transmission ratio. A ratio of the first transmission ratio to the second transmission ratio is greater than or equal to 2.5 and less than or equal to 4.5.

In some examples, the ratio of the first transmission ratio to the second transmission ratio is greater than or equal to 3 and less than or equal to 4.

In some examples, a ratio of an output efficiency of the first output shaft to an output efficiency of the second output shaft is greater than or equal to 0.9 and less than or equal to 1.35.

In some examples, the ratio of the output efficiency of the first output shaft to the output efficiency of the second output shaft is greater than or equal to 1.0 and less than or equal to 1.05.

In some examples, the grip has a grip axis, and the motor shaft is substantially perpendicular to the grip axis.

In some examples, at least one of the first output shaft and the second output shaft is substantially parallel to the motor shaft.

In some examples, a width of the grip along a left and right direction of the housing is less than or equal to 48 cm, and/or a height of the grip along an up and down direction of the housing is less than or equal to 64 cm.

In some examples, a height of the front portion along the up and down direction of the housing is less than or equal to 110 cm.

In some examples, an outer diameter of the electric motor is greater than or equal to 32 cm and less than or equal to 48 cm.

In some examples, the housing further includes a rear portion, and the front portion, the grip, and the rear portion are disposed in sequence along a front and rear direction.

In some examples, the housing includes a left housing and a right housing, and the left housing and the right housing are fastened to form the front portion, the grip, and the rear portion. Alternatively, the front portion is detachably connected to the grip, the grip is detachably connected to the rear portion, and the grip includes the left housing and the right housing.

In some examples, the multi-function power tool further includes a speed regulation assembly. The speed regulation assembly is configured to regulate a rotational speed of the motor shaft. The speed regulation assembly is disposed on the front portion or the grip.

In some examples, the speed regulation assembly is disposed on a rear end surface of the front portion and is located on an upper side of the grip. Alternatively, the speed regulation assembly is disposed on a lower end surface of the grip.

A multi-function power tool includes: a housing including a front portion and a grip; and a power mechanism including an output assembly and an electric motor. The output assembly includes a first output shaft and a second output shaft. The first output shaft is configured to be mounted with and drive a first attachment, and the second output shaft is configured to be mounted with and drive a second attachment. The electric motor has a motor shaft that drives the first output shaft and the second output shaft. The front portion is provided with an air inlet and an air outlet. A fan and a circuit board assembly are accommodated in the front portion. When the fan rotates, a heat dissipation airflow enters the front portion through the air inlet, flows at least through the circuit board assembly, and flows out of the front portion through the air outlet.

In some examples, the electric motor is disposed in the front portion, and the heat dissipation airflow flows through the electric motor.

In some examples, along a flow direction of the airflow, the electric motor is located downstream of the circuit board assembly.

In some examples, the fan is disposed on the motor shaft.

In some examples, the air inlet is provided on at least one side of the front portion along a left and right direction.

In some examples, the air outlet is provided at an upper end of the front portion.

In some examples, the air outlet includes a first air outlet and a second air outlet, and the first air outlet and the second air outlet are provided on left and right sides of the upper end of the front portion, respectively.

In some examples, the circuit board assembly extends in a first plane, and the grip has a grip axis that intersects with the first plane.

In some examples, the circuit board assembly extends in the first plane, and an axis of the motor shaft intersects with or is parallel to the first plane.

In some examples, the axis of the motor shaft intersects with the first plane, and an upper portion of the circuit board assembly is inclined toward the electric motor.

In some examples, the housing includes a battery pack coupling portion for mounting a battery pack. The battery pack powers at least the power mechanism. The battery pack can be coupled to the battery pack coupling portion along a direction of a first straight line. The first straight line is parallel or perpendicular to the axis of the motor shaft, or the first straight line and the axis of the motor shaft are disposed at a first included angle.

A multi-function power tool includes: a housing including a front portion and a grip; and a power mechanism including an output assembly and an electric motor. The output assembly includes a first output shaft and a second output shaft. The first output shaft is configured to be mounted with and drive a first attachment, and the second output shaft is configured to be mounted with and drive a second attachment. The electric motor has a motor shaft that drives the first output shaft and the second output shaft. A dynamic vibration absorption mechanism is disposed in the grip.

In some examples, the dynamic vibration absorption mechanism includes at least one dynamic vibration absorber.

In some examples, one dynamic vibration absorber is provided. The dynamic vibration absorber is disposed at an intermediate position of the grip. Alternatively, two dynamic vibration absorbers are provided. The two dynamic vibration absorbers are spaced apart along a front and rear direction of the grip.

In some examples, the dynamic vibration absorber includes a resonant member and an elastic member. One end of the elastic member is connected to the resonant member, and the other end of the elastic member is connected to an inner wall of the grip.

In some examples, the dynamic vibration absorber is configured to vibrate along a left and right direction of the grip, and elastic members are disposed on both a left side of the resonant member and a right side of the resonant member.

In some examples, a mounting member is disposed on the inner wall of the grip, and an end of the elastic member away from the resonant member is connected to the mounting member.

In some examples, the mounting member is a positioning slot into which the elastic member is inserted, or the mounting member is a positioning boss on which the elastic member is sleeved.

In some examples, the resonant member is a mass block, and the elastic member is a spring. The mass block has a slot into which the spring is inserted, and a boss on which the spring is sleeved is provided in the slot.

In some examples, the grip has a grip axis, and the motor shaft is substantially perpendicular to the grip axis.

In some examples, at least one of the first output shaft and the second output shaft is substantially parallel to the motor shaft.

A multi-function power tool includes: a housing including a front portion and a grip; and a power mechanism including an output assembly and an electric motor. The output assembly includes a first output shaft and a second output shaft. The first output shaft is configured to be mounted with and drive a first attachment, and the second output shaft is configured to be mounted with and drive a second attachment. The electric motor has a motor shaft that drives the first output shaft and the second output shaft. The multi-function power tool further includes a detection member and a target member. The detection member is disposed on the housing, and the target member is disposed on the second attachment. The detection member detects a position of the target member, and after the second attachment is mounted to the second output shaft, a control mode corresponding to the second attachment is used for controlling running of the electric motor.

In some examples, the detection member is a magnetic sensor, and the target member is a magnetic member.

In some examples, the detection member is a Hall element, and the target member is a magnet.

In some examples, the detection member is disposed on the front portion.

In some examples, the second attachment has a mounting portion. When the second attachment is mounted to the second output shaft, the mounting portion extends into the front portion, and the target member is disposed on the mounting portion.

In some examples, the housing is provided with a through hole and a protective structure. When the second attachment is not mounted, the protective structure shields the through hole. When the second attachment is mounted, the protective structure is moved away from the through hole so that the mounting portion is inserted.

In some examples, the protective structure includes a protective cover and an elastic reset member. The elastic reset member is disposed between the protective cover and the housing. The protective cover shields the through hole when the second attachment is not mounted. When the mounting portion is inserted into the through hole, the protective cover is pushed to compress the elastic reset member.

In some examples, the multi-function power tool further includes a speed regulation assembly. The speed regulation assembly is configured to regulate a rotational speed of the motor shaft. The protective structure further includes a speed regulation locking member. The speed regulation locking member is connected to the protective cover.

When the mounting portion is inserted into the through hole, the protective cover is pushed to move to drive the speed regulation locking member to limit a speed regulation function of the speed regulation assembly.

In some examples, the second attachment is a circular saw attachment, and the detection member controls the electric motor to maintain a constant speed corresponding to the second attachment after the second attachment is mounted to the second output shaft.

In some examples, the multi-function power tool further includes the speed regulation assembly. The speed regulation assembly is configured to regulate the rotational speed of the motor shaft. The second attachment is a multi-function tool working head, and the detection member controls the speed regulation assembly to enable the regulation after the second attachment is mounted to the second output shaft.

In some examples, the housing is provided with a second mounting hole at a position corresponding to the second output shaft. A dust plug is detachably disposed at the second mounting hole. When the second attachment is not mounted, the dust plug shields the second mounting hole. When the second attachment is mounted, the dust plug is separated from the second mounting hole and is not separated from the housing.

### BRIEF DESCRIPTION OF DRAWINGS

FIG. 1 is structural view one of a multi-function power tool according to the present application.
FIG. 2 is structural view two of a multi-function power tool according to the present application.
FIG. 3 is a section view of a multi-function power tool according to the present application.
FIG. 4 is a front view of some structures of a power mechanism according to the present application.
FIG. 5 is a front view of a multi-function power tool equipped with a first attachment according to the present application.
FIG. 6 is a bottom view of a multi-function power tool equipped with a first attachment according to the present application.
FIG. 7 is a structural view of a multi-function power tool equipped with a first attachment according to the present application.
FIG. 8 is a front view of a multi-function power tool equipped with a second attachment according to the present application.
FIG. 9 is a structural view of a multi-function power tool equipped with a second attachment according to the present application.
FIG. 10 is a schematic view of some structures of a power mechanism according to the present application.
FIG. 11 is an exploded front view of some structures of a power mechanism according to the present application.
FIG. 12 is section view one of some structures of a power mechanism according to the present application.
FIG. 13 is section view two of some structures of a power mechanism according to the present application.
FIG. 14 is an exploded view of a gearbox according to the present application.
FIG. 15 is structural view one of a circular saw attachment according to the present application.
FIG. 16 is an enlarged view of part A in FIG. 15.
FIG. 17 is structural view two of a circular saw attachment according to the present application.
FIG. 18 is structural view three of a circular saw attachment according to the present application.
FIG. 19 is a section view of some structures of a multi-function power tool according to the present application.
FIG. 20 is an enlarged view of part B in FIG. 19.
FIG. 21 is side view one of some structures of a multi-function power tool according to the present application.
FIG. 22 is side view two of some structures of a multi-function power tool according to the present application.
FIG. 23 is a section view of some structures of a multi-function power tool according to the present application.

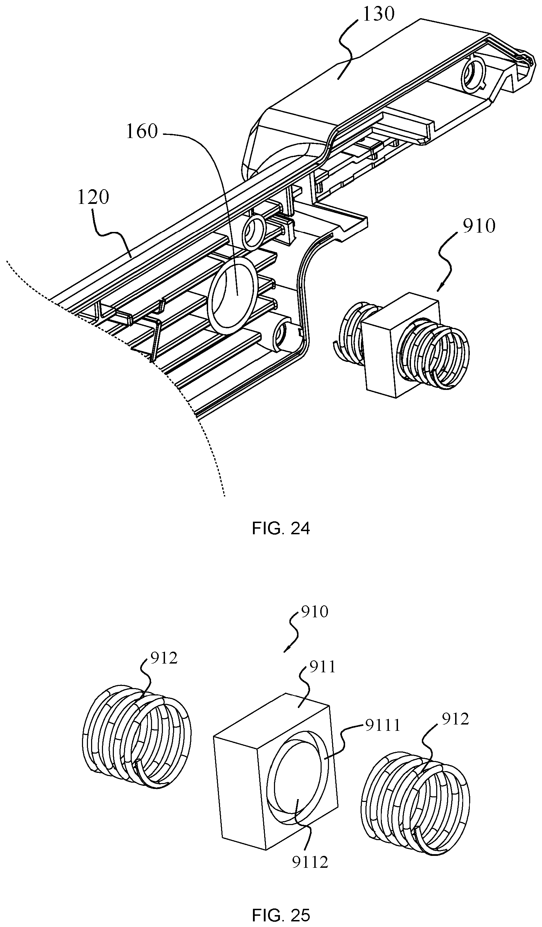

FIG. 24 is an exploded view of some structures of a multi-function power tool according to the present application.
FIG. 25 is an exploded view of a dynamic vibration absorber according to the present application.

### Reference list:

- 100: housing
- 101: first mounting hole
- 102: second mounting hole
- 110: front portion
- 111: air inlet
- 112: air outlet
- 120: grip
- 121: grip axis
- 130: rear portion
- 140: battery pack coupling portion
- 150: dust plug
- 160: mounting member
- 200: power mechanism
- 210: output assembly
- 211: first output shaft
- 2111: shaft body
- 2112: locking rod
- 212: second output shaft
- 220: electric motor
- 221: motor shaft
- 230: first transmission assembly
- 231: shift fork bearing
- 232: shift fork
- 233: first bearing assembly
- 240: second transmission assembly
- 241: first gear
- 242: second gear
- 243: second bearing assembly
- 250: intermediate shaft
- 251: connecting section
- 252: eccentric shaft section
- 253: concentric shaft section
- 260: intermediate bearing assembly
- 270: gearbox
- 271: box body
- 272: box cover
- 280: quick clamping mechanism
- 300: battery pack
- 400: first attachment
- 500: second attachment
- 510: saw blade
- 520: shield
- 521: limit boss
- 5211: locking slot
- 522: avoidance hole
- 530: attachment shaft
- 531: limit protrusion
- 540: attachment bearing
- 550: base plate
- 560: support
- 561: elastic protrusion
- 570: mounting portion
- 610: detection member
- 620: target member
- 630: protective structure
- 631: protective cover
- 632: elastic reset member
- 633: speed regulation locking member
- 700: speed regulation assembly
- 810: fan
- 820: circuit board assembly
- 821: first plane
- 900: dynamic vibration absorption mechanism
- 910: dynamic vibration absorber
- 911: resonant member
- 9111: slot
- 9112: boss
- 912: elastic member

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

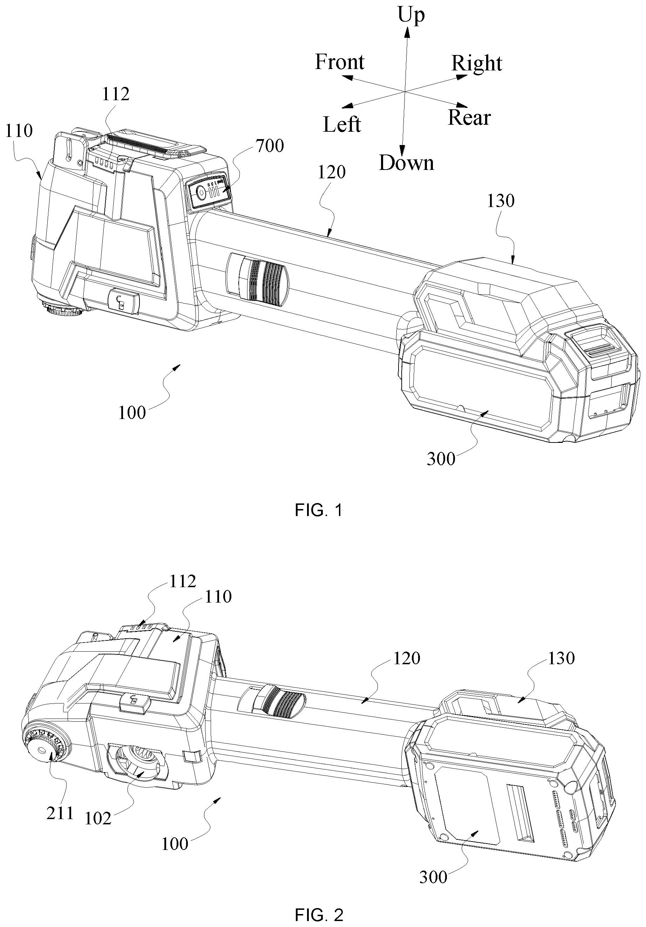

Referring to FIGS. 1 to 9, the present application provides a multi-function power tool. The multi-function power tool includes a housing 100 and a power mechanism 200. The housing 100 includes a front portion 110 and a grip 120. The power mechanism 200 includes an output assembly 210 and an electric motor 220. The output assembly 210 includes a first output shaft 211 and a second output shaft 212. The electric motor 220 has a motor shaft 221 that drives the first output shaft 211 and the second output shaft 212.

The grip 120 has a grip axis 121, and an extension direction of the grip axis 121 is defined as a front and rear direction. The motor shaft 221 is substantially perpendicular to the grip axis 121, and an extension direction of the motor shaft 221 is defined as an up and down direction. A left and right direction is perpendicular to both the grip axis 121 and an axis of the motor shaft 221.

The front portion 110 is disposed at a front end of the grip 120. The housing 100 further includes a rear portion 130. The rear portion 130 is disposed at a rear end of the grip 120. That is, the front portion 110, the grip 120, and the rear portion 130 are sequentially disposed along the front and rear direction.

In some examples, the housing 100 includes a left housing and a right housing. The left housing and the right housing are fastened to form the front portion 110, the grip 120, and the rear portion 130. In some examples, the front portion 110 is detachably connected to the grip 120, the grip 120 is detachably connected to the rear portion 130, and the grip 120 includes the left housing and the right housing.

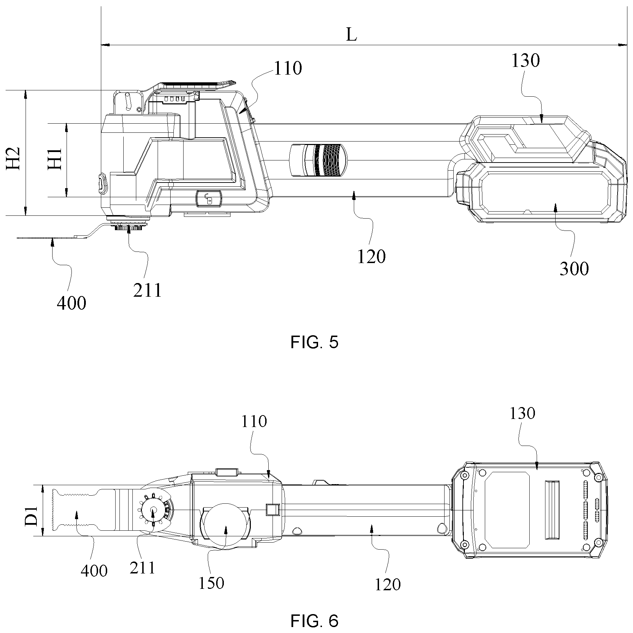

In FIG. 5, H1 represents a height of the grip 120 along the up and down direction of the housing 100. The height of the grip 120 along the up and down direction of the housing 100 is less than or equal to 64 cm. In some examples, the height of the grip 120 along the up and down direction of the housing 100 is less than or equal to 58 cm. In some examples, the height of the grip 120 along the up and down direction of the housing 100 is equal to 53 cm.

In FIG. 6, D1 represents a width of the grip 120 along the left and right direction of the housing 100. The width of the grip 120 along the left and right direction of the housing 100 is less than or equal to 48 cm. In some examples, the width of the grip 120 along the left and right direction of the housing 100 is less than or equal to 45 cm. In some examples, the width of the grip 120 along the left and right direction of the housing 100 is equal to 40 cm.

In FIG. 5, L represents a length of the entire machine. The length of the entire machine is less than or equal to 400 cm. In some examples, the length of the entire machine is equal to 380 cm.

In FIG. 5, H2 represents a height of the front portion 110 along the up and down direction of the housing 100. The height of the front portion 110 along the up and down direction of the housing 100 is less than or equal to 110 cm. In some examples, the height of the front portion 110 along the up and down direction of the housing 100 is less than or equal to 100 cm. In some examples, the height of the front portion 110 along the up and down direction of the housing 100 is equal to 92 cm.

In some examples, the electric motor 220 is disposed in the front portion 110 so that a volume of the grip 120 is reduced, and it is convenient to hold the grip 120. The first output shaft 211 and the second output shaft 212 are each disposed in the front portion 110 and are relatively close to the electric motor 220, making a structure compact and convenient for transmission. The first output shaft 211 and the second output shaft 212 are distributed on a front side of the motor shaft 221 and a rear side of the motor shaft 221 along the front and rear direction of the housing 100. The layout is optimized to ensure smooth transmission.

An outer diameter of the electric motor 220 is greater than or equal to 32 cm and less than or equal to 48 cm. In some examples, the outer diameter of the electric motor 220 is greater than or equal to 36 cm and less than or equal to 44 cm. In some examples, the outer diameter of the electric motor 220 is equal to 40 cm.

The housing 100 further includes a battery pack coupling portion 140 for mounting a battery pack 300. The battery pack 300 powers at least the power mechanism 200. The battery pack coupling portion 140 is disposed at the rear portion 130 to balance the entire machine. The battery pack 300 can be coupled to the battery pack coupling portion 140 along a direction of a first straight line. The first straight line is parallel or perpendicular to the axis of the motor shaft 221, or the first straight line and the axis of the motor shaft 221 are disposed at a first included angle. That is to say, the battery pack 300 can be coupled to the battery pack coupling portion 140 along the front and rear direction, the left and right direction, the up and down direction, or any other direction of the housing 100. The first included angle is greater than 0 degrees and less than 90 degrees.

At least one of the first output shaft 211 and the second output shaft 212 is substantially parallel to the motor shaft 221, thereby making the structure compact, saving space, reducing a volume of the entire machine, optimizing a center of gravity of the entire machine, and improving a hand feel of a user during use.

In some examples, the motor shaft 221, the first output shaft 211, and the second output shaft 212 are substantially parallel so that it is convenient for the first output shaft 211 and the second output shaft 212 to share the motor shaft 221, thereby ensuring a compact structure. In some examples, the motor shaft 221 and at least one of the first output shaft 211 and the second output shaft 212 are disposed at an included angle. The included angle between the first output shaft 211 and the motor shaft 221 may be 3° to 30° to adapt to a mounting space. If the space permits, a first attachment 400 and a second attachment 500 may be mounted at the same time.

In some examples, the motor shaft 221, the first output shaft 211, and the second output shaft 212 extend toward the same side of the housing 100. In some examples, the motor shaft 221 and one of the first output shaft 211 and the second output shaft 212 extend toward the same side of the housing 100, and the motor shaft 221 and the other of the first output shaft 211 and the second output shaft 212 extend in opposite directions.

A1 represents the axis of the motor shaft 221, A2 represents an axis of the first output shaft 211, and A3 represents an axis of the second output shaft 212. At least two of the axis of the motor shaft 221, the axis of the first output shaft 211, and the axis of the second output shaft 212 are in the same plane.

In some examples, the housing 100 is provided with a first mounting hole 101 at a position corresponding to the first output shaft 211. The first output shaft 211 extends out of the first mounting hole 101, or the first output shaft 211 is located within the first mounting hole 101. The housing 100 is provided with a second mounting hole 102 at a position corresponding to the second output shaft 212. The second output shaft 212 extends out of the second mounting hole 102, or the second output shaft 212 is located within the second mounting hole 102. The details may be configured according to the type of attachments to be mounted.

Referring to FIGS. 2, 3, and 7, the first output shaft 211 extends out of the first mounting hole 101, and the second output shaft 212 is located within the second mounting hole 102. A dust plug 150 is detachably disposed at the second mounting hole 102. When the first attachment 400 is mounted on the first output shaft 211, the dust plug 150 shields the second mounting hole 102 to play a dustproof role. When the second attachment 500 is mounted to the second mounting hole 102, the dust plug 150 is separated from the second mounting hole 102 and is not separated from the housing 100 to prevent loss. Specifically, the dust plug 150 and the housing 100 may be connected to each other through a connecting rope. In some examples, the dust plug 150 may be made of a rubber material and has a pattern that tightly mates with an edge of the second mounting hole 102.

The first output shaft 211 is configured to be mounted with and drive the first attachment 400, and the second output shaft 212 is configured to be mounted with and drive the second attachment 500. The first attachment 400 or the second attachment 500 is replaced and used so that various functions such as long-distance cutting, short-distance cutting, polishing, and grinding can be implemented.

The first output shaft 211 and the second output shaft 212 are not shafts of attachments, but are original structures of the multi-function power tool within the housing 100, where the first output shaft 211 and the second output shaft 212 cannot be detached and mounted by the user.

The first attachment 400 may be a multi-function tool working head. For example, the first attachment 400 may be a fan-shaped saw blade, an oscillating scraper, or a triangular sanding pad, where a diameter of the fan-shaped saw blade is 100 cm. The second attachment 500 may be a circular saw attachment. When the multi-function tool working head is mounted to the first output shaft 211, the multi-function power tool is in a multi-function tool state. When the circular saw attachment is mounted to the second output shaft 212, the multi-function power tool is in a circular saw state.

In some examples, when the first attachment 400 is mounted to the first output shaft 211, the second attachment 500 is not mounted to the second output shaft 212. That is to say, either the first attachment 400 or the second attachment 500 is in a mounted state to ensure safety of the tool and working accuracy.

The first output shaft 211 is an oscillating output shaft, and/or the second output shaft 212 is a rotating output shaft. In some examples, the first output shaft 211 is the oscillating output shaft, the first attachment 400 may be the multi-function tool working head, the second output shaft 212 is the rotating output shaft, and the second attachment 500 may be the circular saw attachment.

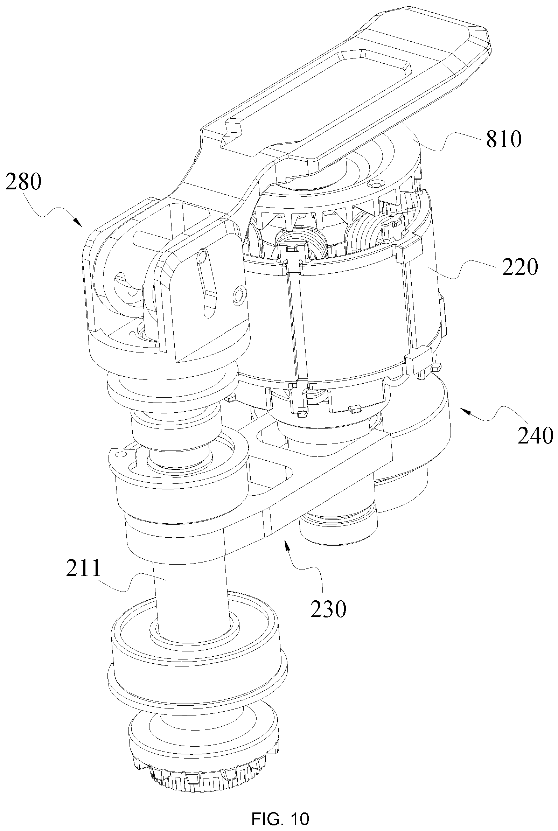

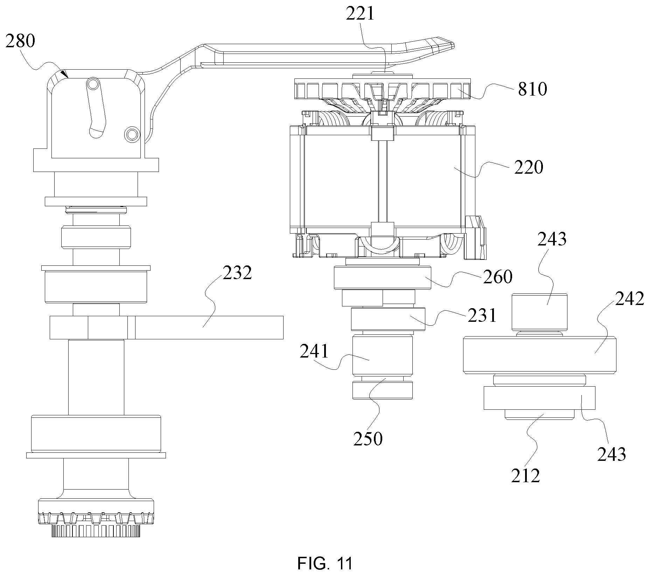

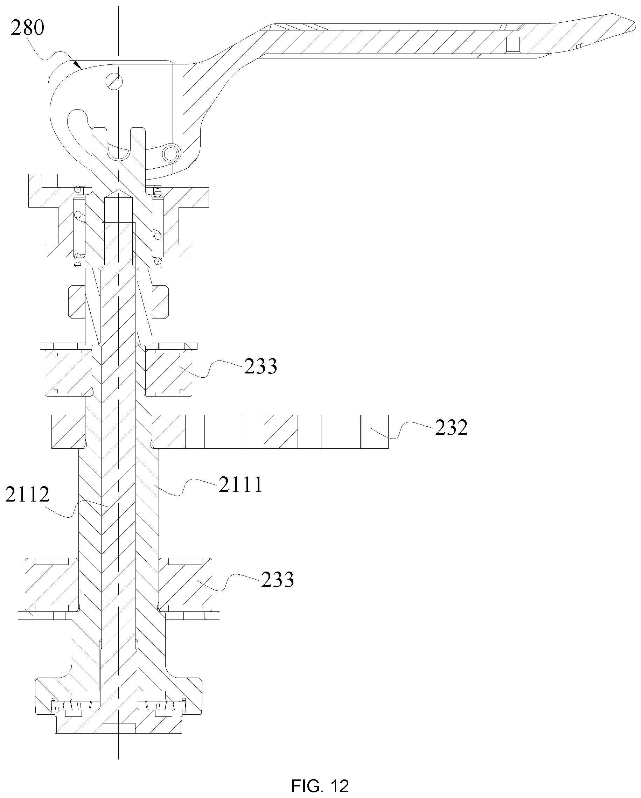

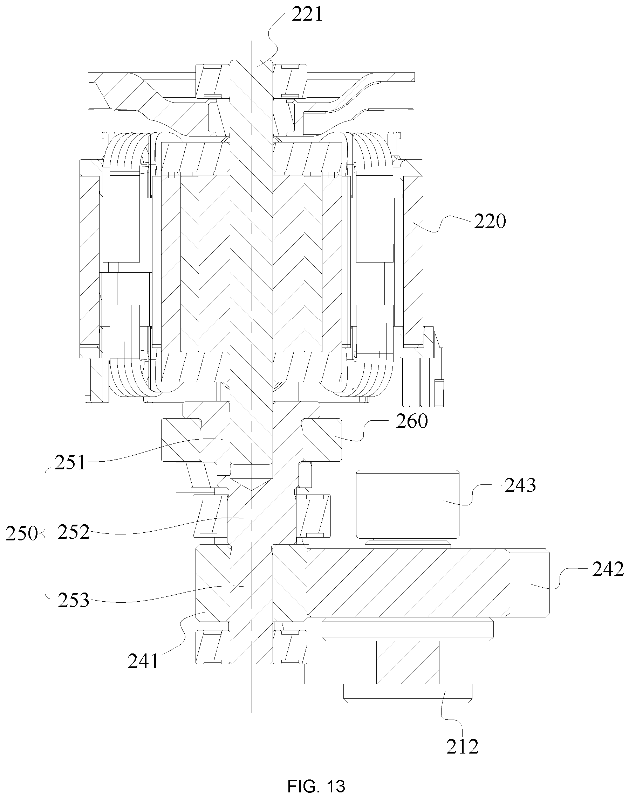

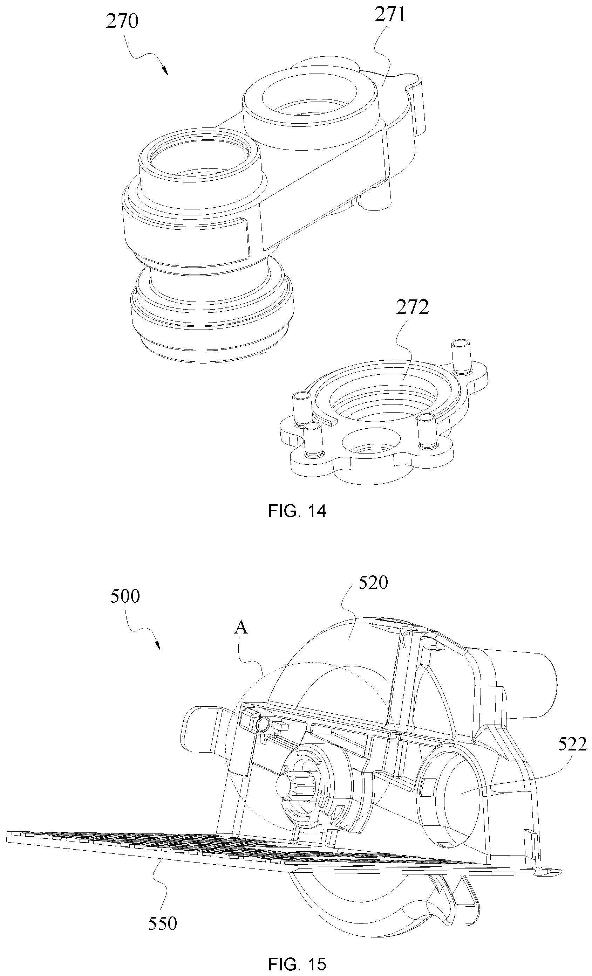

Referring to FIGS. 10 to 14, the power mechanism 200 further includes a first transmission assembly 230. The motor shaft 221 transmits power to the first output shaft 211 through the first transmission assembly 230. When the first output shaft 211 is the oscillating output shaft, the motor shaft 221 transmits power to the first output shaft 211 through the first transmission assembly 230 to drive the first output shaft 211 to swing.

The motor shaft 221 may directly drive the second output shaft 212. Alternatively, the power mechanism 200 may further include a second transmission assembly 240, and the motor shaft 221 transmits power to the second output shaft 212 through the second transmission assembly 240. When the second output shaft 212 is the rotating output shaft, the motor shaft 221 transmits power to the second output shaft 212 through the second transmission assembly 240 to drive the second output shaft 212 to rotate.

The power mechanism 200 further includes an intermediate shaft 250. The intermediate shaft 250 is connected to the motor shaft 221. The first transmission assembly 230 and the second transmission assembly 240 share the intermediate shaft 250. The number of parts is reduced, and the compact structure is ensured.

For example, the first output shaft 211 is the oscillating output shaft, and the second output shaft 212 is the rotating output shaft. The intermediate shaft 250 includes a connecting section 251, an eccentric shaft section 252, and a concentric shaft section 253. The connecting section 251 is connected to the motor shaft 221, the eccentric shaft section 252 is eccentrically disposed relative to the motor shaft 221, and the concentric shaft section 253 is concentrically disposed with the motor shaft 221. With the structural configuration of the intermediate shaft 250, it is convenient to output multiple transmission states. The eccentric shaft section 252 is configured to output a swing state, and the concentric shaft section 253 is configured to output a rotation state, so as to adapt to the first output shaft 211 and the second output shaft 212.

The first transmission assembly 230 is connected to the eccentric shaft section 252 to convert rotation of the motor shaft 221 into a swing of the first output shaft 211. The second transmission assembly 240 is connected to the concentric shaft section 253 to convert rotation of the motor shaft 221 into rotation of the second output shaft 212.

Specifically, the first transmission assembly 230 includes a shift fork bearing 231 and a shift fork 232. The shift fork bearing 231 is sleeved on the eccentric shaft section 252. The shift fork 232 is connected to the first output shaft 211. The shift fork 232 is provided with a U-shaped opening at one end, and the shift fork bearing 231 is disposed in the U-shaped opening. The shift fork 232 may be fixedly connected to or in interference fit with the first output shaft 211.

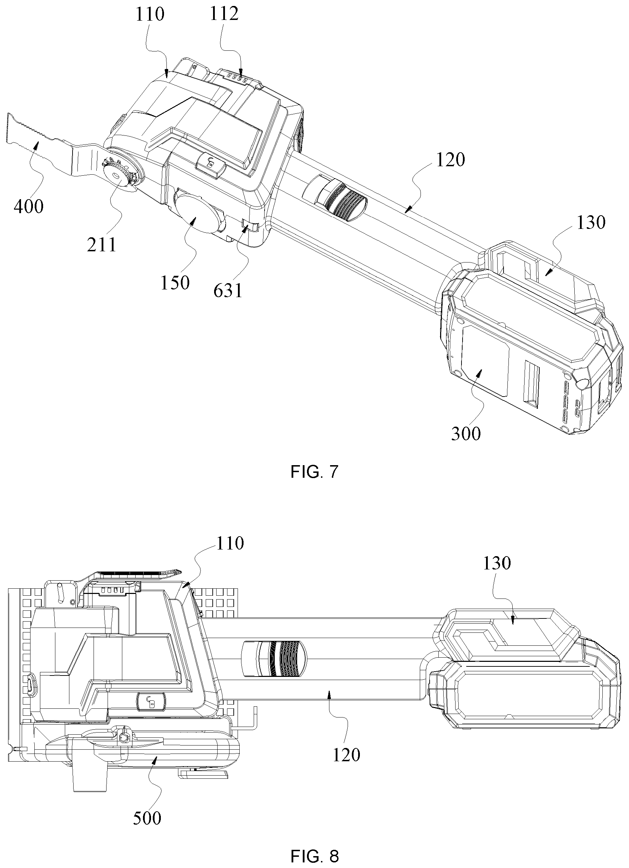

When the motor shaft 221 rotates, the eccentric shaft section 252 is driven to move eccentrically relative to the axis of the motor shaft 221. Thus, the shift fork bearing 231 is caused to push the shift fork 232 to swing about the axis of the first output shaft 211 so that the shift fork 232 drives the first output shaft 211 to swing. With reference to FIG. 7, the first output shaft 211 swings such that the first attachment 400 located on the first output shaft 211 swings.

The power mechanism 200 further includes an intermediate bearing assembly 260.

The intermediate bearing assembly 260 is sleeved on the intermediate shaft 250 and supports the intermediate shaft 250. The intermediate bearing assembly 260 may include at least two intermediate bearings. The two intermediate bearings are spaced apart on the intermediate shaft 250, and the shift fork bearing 231 is located between the two intermediate bearings. The power mechanism 200 further includes a counterweight. The counterweight is sleeved on the intermediate shaft 250 and located between an intermediate bearing and the shift fork bearing 231. The power mechanism 200 further includes a gasket. The gasket is sleeved on the intermediate shaft 250 and located between the shift fork bearing 231 and the counterweight.

The first transmission assembly 230 further includes a first bearing assembly 233. The first bearing assembly 233 is sleeved on the first output shaft 211 and supports the first output shaft 211. The first bearing assembly 233 may include two first bearings. The two first bearings are spaced apart on the first output shaft 211, and the shift fork 232 is located between the two first bearings.

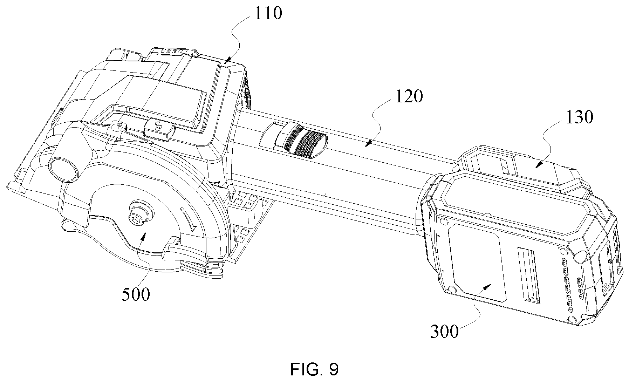

The second transmission assembly 240 includes a first gear 241 and a second gear 242. The first gear 241 is disposed on the concentric shaft section 253, and the second gear 242 is disposed on the second output shaft 212. The first gear 241 meshes with the second gear 242. When the motor shaft 221 rotates, the concentric shaft section 253 is driven to rotate about the axis of the motor shaft 221. Thus, the first gear 241 is caused to drive the second gear 242 to rotate, thereby implementing the rotation of the second output shaft 212. With reference to FIG. 9, the second output shaft 212 rotates such that at least some components of the second attachment 500 that is connected to the second output shaft 212 rotate. The first gear 241 is located between the two intermediate bearings and is disposed close to the shift fork bearing 231.

The second transmission assembly 240 further includes a second bearing assembly 243. The second bearing assembly 243 is sleeved on the second output shaft 212 and supports the second output shaft 212. The second bearing assembly 243 may include two second bearings. The two second bearings are spaced apart on the second output shaft 212, and the second gear 242 is located between the two second bearings.

The multi-function power tool further includes a gearbox 270. The gearbox 270 is configured to support and protect the first transmission assembly 230 and the second transmission assembly 240. Specifically, the motor shaft 221, the first output shaft 211, and the second output shaft 212 are each inserted through the gearbox 270. The intermediate shaft 250, the shift fork 232, the first gear 241, the second gear 242, the intermediate bearing assembly 260, the counterweight, the gasket, the first bearing assembly 233, and the second bearing assembly 243 are each disposed in the gearbox 270. The gearbox 270 supports the intermediate bearing assembly 260, the first bearing assembly 233, and the second bearing assembly 243.

The gearbox 270 has a split structure to facilitate assembly. The gearbox 270 includes a detachable box body 271 and a detachable box cover 272. An accommodation space is formed between the box body 271 and the box cover 272. The box body 271 and the box cover 272 may be connected to each other through a screw.

The multi-function power tool further includes a quick clamping mechanism 280. The first output shaft 211 includes a shaft body 2111 and a locking rod 2112. The shaft body 2111 has a hollow structure, and the locking rod 2112 is inserted through the shaft body 2111. One end of the locking rod 2112 is connected to the quick clamping mechanism 280, and the other end of the locking rod 2112 can clamp the first attachment 400 with the shaft body 2111. The quick clamping mechanism 280 is configured to lock the shaft body 2111 and the locking rod 2112. In an unlocked state, the locking rod 2112 can be displaced axially relative to the shaft body 2111 to facilitate detachment of the first attachment 400. In a locked state, the quick clamping mechanism 280 locks the shaft body 2111 and the locking rod 2112 to clamp the first attachment 400. When the first attachment 400 is replaced, the shaft body 2111 does not need to be detached. The locking rod 2112 can be unlocked only by operating the quick clamping mechanism 280 to implement quick replacement.

The shift fork 232 and the first bearing assembly 233 are each connected to the shaft body 2111.

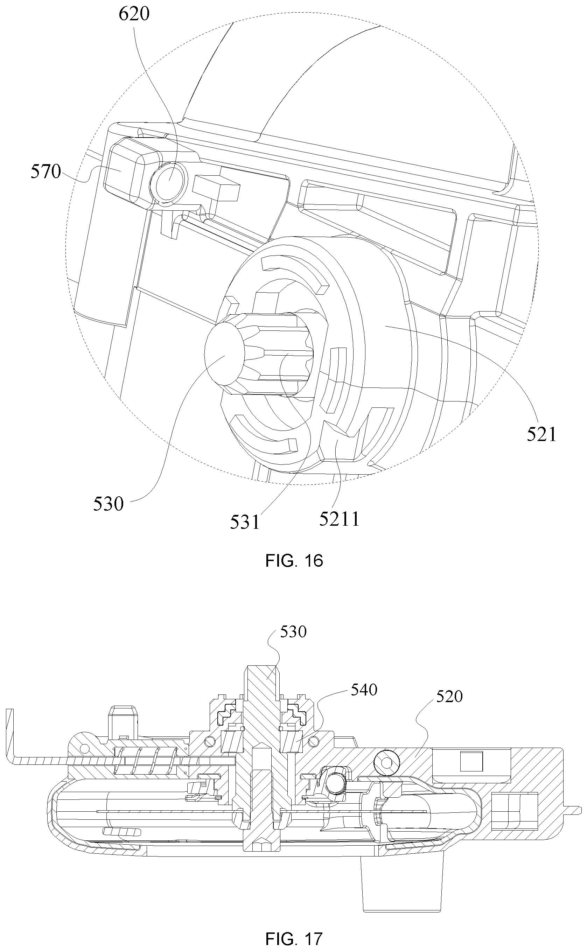

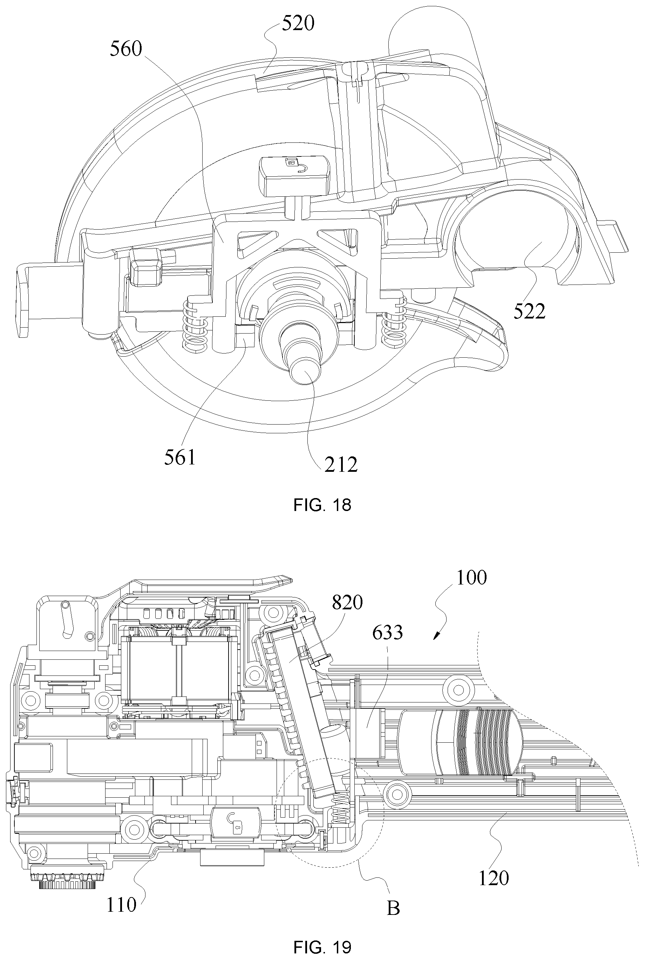

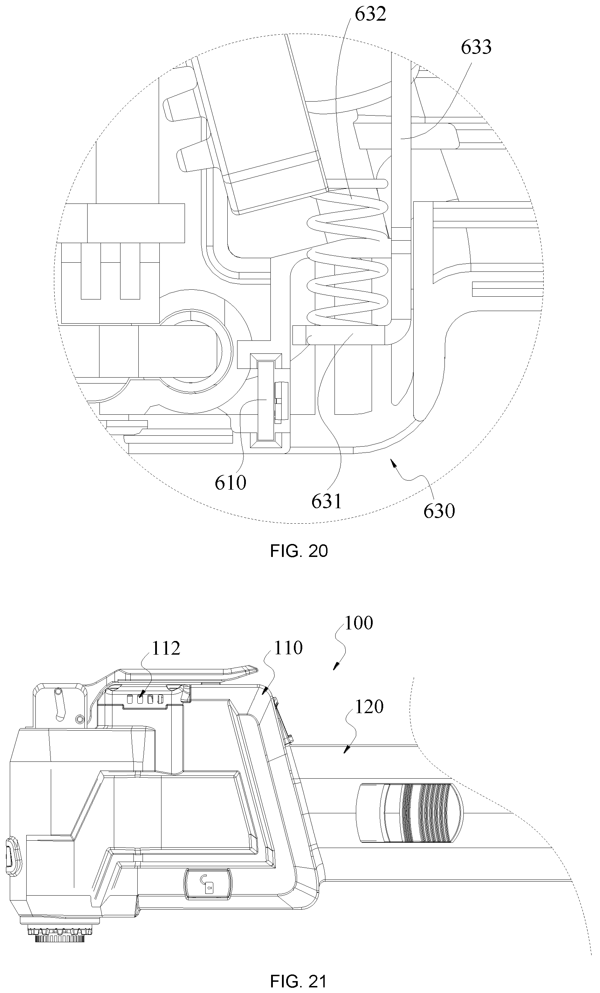

Referring to FIGS. 8 and 9 and FIGS. 15 to 20, for example, the second attachment 500 is the circular saw attachment. The circular saw attachment includes a saw blade 510, a shield 520, and an attachment shaft 530. The attachment shaft 530 is rotatably connected to the shield 520. The saw blade 510 is mounted on the attachment shaft 530. An end of the attachment shaft 530 facing away from the saw blade 510 is connected to the second output shaft 212. When the second attachment 500 is mounted, the attachment shaft 530 is connected to the second output shaft 212, and the second output shaft 212 can transmit power to the attachment shaft 530 to drive the saw blade 510 to rotate.

A diameter of the saw blade 510 is greater than or equal to 85 cm and less than or equal to 105 cm.

The attachment shaft 530 is rotatably connected to the shield 520 through an attachment bearing 540 for ensuring cutting accuracy and reducing machining difficulty.

The circular saw attachment further includes a base plate 550. The base plate 550 is connected to the shield 520. In some examples, the base plate 550 and the shield 520 are fixedly connected to each other, and depth adjustment and angle adjustment therebetween cannot be performed. After the circular saw attachment is mounted on the second output shaft 212, the base plate 550 is located on a left side of the housing 100 or a right side of the housing 100.

Limit protrusions 531 are provided on an outer circumferential surface of the attachment shaft 530. An end portion of the first output shaft 211 is provided with a mounting slot. An inner wall of the mounting slot is provided with limit grooves. When the circular saw attachment is mounted, the attachment shaft 530 is inserted into the mounting slot so that the limit protrusions 531 are inserted into the limit grooves to implement positioning. Thus, the attachment shaft 530 and the second output shaft 212 are circumferentially fixed, and the second output shaft 212 can transmit torque to the attachment shaft 530.

The circular saw attachment is connected to the housing 100 of the multi-function power tool through a snap structure, which facilitates mounting and detachment. During use, the circular saw attachment is fixed to the housing 100 to avoid detachment of the circular saw attachment.

The snap structure includes an elastic protrusion 561 and a locking slot 5211. One of the elastic protrusion 561 and the locking slot 5211 is disposed on the housing 100, and the other of the elastic protrusion 561 and the locking slot 5211 is disposed on the shield 520. When the attachment shaft 530 is connected to the second output shaft 212, the elastic protrusion 561 is inserted into the locking slot 5211 and elastically locked. In some examples, the snap structure includes a support 560. The support 560 is disposed on the housing 100. The elastic protrusion 561 is disposed on the support 560. The shield 520 is provided with a limit boss 521 around the attachment shaft 530. The locking slot 5211 is provided on an outer circumferential surface of the limit boss 521.

The shield 520 is provided with an avoidance hole 522 at a position corresponding to the first output shaft 211. When the circular saw attachment is mounted, part of the first output shaft 211 extending out of the housing 100 is inserted into the avoidance hole 522.

The multi-function power tool further includes a detection member 610 and a target member 620. The detection member 610 is disposed on the housing 100, and the target member 620 is disposed on the second attachment 500. The detection member 610 detects a position of the target member 620, and after the second attachment 500 is mounted to the second output shaft 212, a control mode corresponding to the second attachment 500 is used for controlling running of the electric motor 220.

It is to be understood that the multi-function power tool includes a controller, and the controller can receive a signal from the detection member 610 to determine whether the second attachment 500 is mounted. The target member 620 is disposed on the second attachment 500. When the detection member 610 detects that the target member 620 is at a mounting position, it is determined that the second attachment 500 is mounted to the second output shaft 212, and the controller may switch the control mode. The control mode corresponding to the second attachment 500 may be specifically set according to a specific type of the second attachment 500.

In some examples, the second attachment 500 is the circular saw attachment, and the detection member 610 controls the electric motor 220 to maintain a constant speed corresponding to the second attachment 500 after the second attachment 500 is mounted to the second output shaft 212. When the circular saw attachment is not mounted to the second output shaft 212, the entire machine has a speed regulation function, and a rotational speed of the motor shaft 221 can be regulated. When the circular saw attachment is mounted to the second output shaft 212, the speed regulation function fails, and the electric motor 220 runs at the constant speed, which may be specifically a maximum rotational speed of the electric motor 220.

In some examples, the detection member 610 is a magnetic sensor, and the target member 620 is a magnetic member. The detection member 610 may be a Hall element, and the target member 620 may be a magnet. When the first attachment 400 is used, the multi-function power tool is in the multi-function tool state, and the machine has the speed regulation function. When the circular saw attachment is inserted, the Hall element detects a magnetic field of the magnet, a rotational speed of the entire machine is locked to the maximum rotational speed, and the speed regulation function fails.

In some examples, the detection member 610 is disposed on the front portion 110. In some examples, the detection member 610 is disposed on the grip 120.

The second attachment 500 has a mounting portion 570. When the second attachment 500 is mounted to the second output shaft 212, the mounting portion 570 extends into the front portion 110, and the target member 620 is disposed on the mounting portion 570. The target member 620 extends into the front portion 110 along with the mounting portion 570 so that the target member 620 is conveniently detected by the detection member 610.

The housing 100 is provided with a through hole and a protective structure 630. When the second attachment 500 is not mounted, the protective structure 630 shields the through hole to prevent dust entry. When the second attachment 500 is mounted, the protective structure 630 is moved away from the through hole so that the mounting portion 570 is inserted.

Referring to FIGS. 7, 19, and 20, the protective structure 630 includes a protective cover 631 and an elastic reset member 632. The elastic reset member 632 is disposed between the protective cover 631 and the housing 100. The protective cover 631 shields the through hole when the second attachment 500 is not mounted. When the mounting portion 570 is inserted into the through hole, the protective cover 631 is pushed to compress the elastic reset member 632.

The protective structure 630 further includes a speed regulation locking member 633. The speed regulation locking member 633 is connected to the protective cover 631. When the mounting portion 570 is inserted into the through hole, the protective cover 631 is pushed to move to drive the speed regulation locking member 633 to limit a speed regulation function of a speed regulation assembly 700. The speed regulation assembly 700 is configured to regulate the rotational speed of the motor shaft 221. When the speed regulation function of the speed regulation assembly 700 is limited, the rotational speed of the electric motor 220 is the constant speed. The speed regulation locking member 633 limits the speed regulation function of the speed regulation assembly 700, which may refer to that a position of the speed regulation locking member 633 limits a button of the speed regulation assembly 700 from being pressed.

In some examples, the second attachment 500 is the multi-function tool working head, and the detection member 610 may control the speed regulation assembly 700 to enable the regulation after the second attachment 500 is mounted to the second output shaft 212. When the multi-function tool working head is mounted to the second output shaft 212, the entire machine has the speed regulation function, and the rotational speed of the electric motor 220 may be regulated according to the type of the multi-function tool working head.

The housing 100 is provided with the second mounting hole 102 at the position corresponding to the second output shaft 212. The dust plug 150 is detachably disposed at the second mounting hole 102. When the second attachment 500 is not mounted, the dust plug 150 shields the second mounting hole 102. When the second attachment 500 is mounted, the dust plug 150 is separated from the second mounting hole 102 and is not separated from the housing 100 to prevent loss.

A transmission ratio from the motor shaft 221 to the first output shaft 211 is a first transmission ratio. A transmission ratio from the motor shaft 221 to the second output shaft 212 is a second transmission ratio. A ratio of the first transmission ratio to the second transmission ratio is greater than or equal to 2.5 and less than or equal to 4.5. In some examples, the ratio of the first transmission ratio to the second transmission ratio is greater than or equal to 3 and less than or equal to 4.

A ratio of an output efficiency of the first output shaft 211 to an output efficiency of the second output shaft 212 is greater than or equal to 0.9 and less than or equal to 1.35. In some examples, the ratio of the output efficiency of the first output shaft 211 to the output efficiency of the second output shaft 212 is greater than or equal to 1.0 and less than or equal to 1.05. The output efficiency of the first output shaft 211 and the output efficiency of the second output shaft 212 may be a transmission efficiency from the motor shaft 220 to the first output shaft 211 and a transmission efficiency from the motor shaft 220 to the second output shaft 212, respectively.

The multi-function power tool further includes the speed regulation assembly 700. The speed regulation assembly 700 is configured to regulate the rotational speed of the motor shaft 221. The speed regulation assembly 700 is disposed on the front portion 110 or the grip 120. When an operator holds the grip 120, it is convenient to operate the speed regulation assembly 700.

In some examples, the speed regulation assembly 700 is disposed on a rear end surface of the front portion 110 and is located on an upper side of the grip 120. In some examples, the speed regulation assembly 700 is disposed on a lower end surface of the grip 120.

In some examples, the speed regulation assembly 700 includes a speed regulation panel. A speed regulation operation member is disposed on the speed regulation panel. The speed regulation can be implemented by pressing, rotating, or toggling the speed regulation operation member. In some examples, the speed regulation assembly 700 includes a speed regulation dial, and the speed regulation can be implemented by rotating the speed regulation dial.

The rotational speed of the electric motor 220 has at least two speed levels including at least a high-speed level and a low-speed level. At the high-speed level, the rotational speed of the electric motor 220 is greater than or equal to 16,000 r/min and less than or equal to 22,000 r/min. At the low-speed level, the rotational speed of the electric motor 220 is greater than or equal to 5,000 r/min and less than or equal to 6,000 r/min.

Referring to FIGS. 1 to 3 and FIGS. 10, 21, and 22, the front portion 110 is provided with an air inlet 111 and an air outlet 112. The multi-function power tool further includes a fan 810 and a circuit board assembly 820. The fan 810 and the circuit board assembly 820 are accommodated in the front portion 110. When the fan 810 rotates, a heat dissipation airflow enters the front portion 110 through the air inlet 111, flows at least through the circuit board assembly 820, and flows out of the front portion 110 through the air outlet 112. The air inlet 111 and the air outlet 112 are each provided on the front portion 110 so that a flow path of the airflow is shortened, and a heat dissipation efficiency is improved.

The electric motor 220 is disposed in the front portion 110, and the heat dissipation airflow flows through the electric motor 220. The airflow not only dissipates heat from the circuit board assembly 820, but also dissipates heat from the electric motor 220, thereby improving a heat dissipation effect. Along a flow direction of the airflow, the electric motor 220 is located downstream of the circuit board assembly 820 to prevent dust from the electric motor 220 from being carried to the circuit board assembly 820.

The fan 810 is disposed on the motor shaft 221. When the motor shaft 221 rotates, the fan 810 is driven to rotate to generate the heat dissipation airflow. Specifically, one end of the motor shaft 221 drives the first output shaft 211 and the second output shaft 212, and the fan 810 is located at the other end of the motor shaft 221.

The air inlet 111 is provided on at least one side of the front portion 110 along the left and right direction. In some examples, the air inlet 111 is provided on a left side of the front portion 110 along the left and right direction. In some examples, the air inlet 111 is provided on a right side of the front portion 110 along the left and right direction. In some examples, the air inlet 111 is provided on the left side of the front portion 110 and the right side of the front portion 110 along the left and right direction. Here, the number of air inlets 111 is not limited. In some examples, the air inlet 111 is provided on a side of the front portion 110 close to the base plate 550 along the left and right direction after the circular saw attachment is mounted.

In some examples, the air outlet 112 is provided at an upper end of the front portion 110 and is closer to a position of the fan 810. The air outlet 112 includes a first air outlet 112 and a second air outlet 112. The first air outlet 112 and the second air outlet 112 are provided on the left and right sides of the upper end of the front portion 110, respectively, thereby increasing an air outlet area, improving the heat dissipation efficiency, and ensuring uniform air discharge.

In some examples, the circuit board assembly 820 extends in a first plane 821, and the grip 120 has the grip axis 121 that intersects with the first plane 821. In some examples, the circuit board assembly 820 extends in the first plane 821, and the axis of the motor shaft 221 intersects with or is parallel to the first plane 821. In some examples, the axis of the motor shaft 221 intersects with the first plane 821, and an upper portion of the circuit board assembly 820 in the front portion 110 is inclined toward the electric motor 220, so as to make full use of space and shorten the flow path of the airflow.

In some examples, the circuit board assembly 820 is accommodated in the rear portion 130, the air inlet 111 is provided on the rear portion 130, and the air outlet 112 is provided on the front portion 110. When the fan 810 rotates, the heat dissipation airflow enters the rear portion 130 through the air inlet 111, flows at least through the circuit board assembly 820, and flows out of the front portion 110 through the air outlet 112. The flow path of the airflow is extended, thereby dissipating heat from more components in the housing 100 and reducing a volume of the front portion 110.

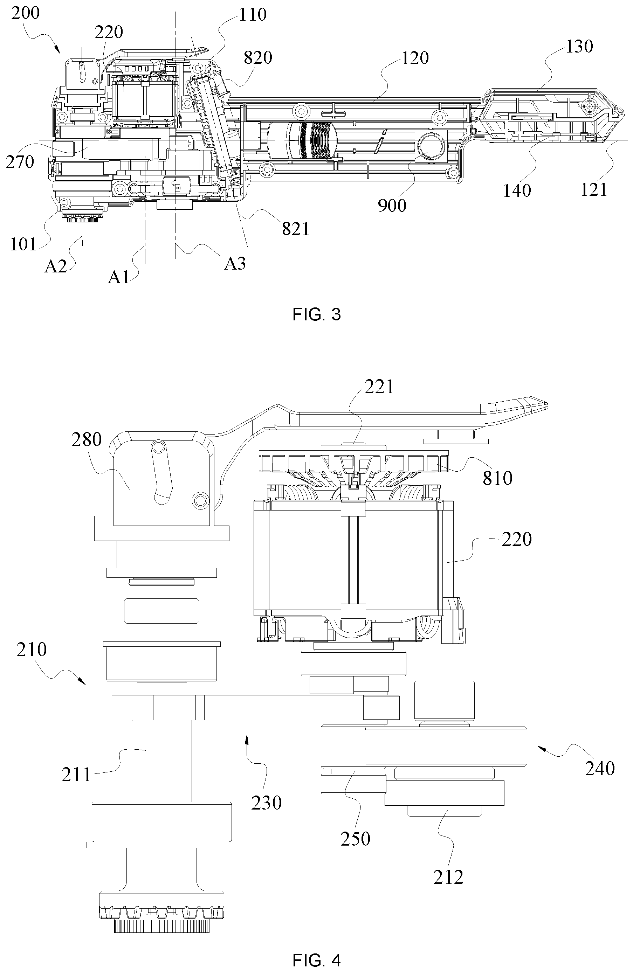

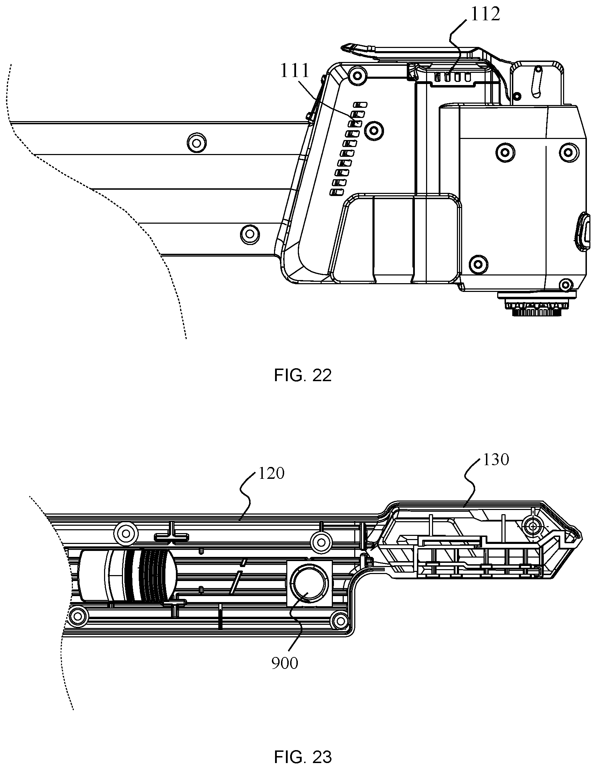

Referring to FIG. 3 and FIGS. 23 to 2 5, the multi-function power tool further includes a dynamic vibration absorption mechanism 900. The dynamic vibration absorption mechanism 900 is disposed in the grip 120. During use, vibration energy of the machine is transferred to the dynamic vibration absorption mechanism 900, and vibration of the machine is reduced through a reaction force of the dynamic vibration absorption mechanism 900 during resonance, thereby improving user experience.

The dynamic vibration absorption mechanism 900 includes at least one dynamic vibration absorber 910. The number of dynamic vibration absorbers 910 may be set according to actual needs. Stiffness of the entire dynamic vibration absorption mechanism 900 and mass of the entire dynamic vibration absorption mechanism 900 are predetermined and may be adjusted according to a magnitude of the actual vibration. In some examples, one dynamic vibration absorber 910 is provided. The dynamic vibration absorber 910 is disposed at an intermediate position of the grip 120. In some examples, two dynamic vibration absorbers 910 are provided. The two dynamic vibration absorbers 910 are spaced apart along the front and rear direction of the grip 120. When the two dynamic vibration absorbers 910 are provided, the stiffness and mass of the two dynamic vibration absorbers 910 remain consistent. To achieve the best vibration reduction effect, the two dynamic vibration absorbers 910 are disposed at positions with relatively large vibration amplitudes, that is, a position where the grip 120 is close to the front portion 110 and a position where the grip 120 is close to the rear portion 130.

The dynamic vibration absorber 910 includes a resonant member 911 and an elastic member 912. One end of the elastic member 912 is connected to the resonant member 911, and the other end of the elastic member 912 is connected to an inner wall of the grip 120. The vibration energy of the machine is transferred to the dynamic vibration absorption mechanism 900, driving the resonant member 911 to vibrate so that the resonant member 911 compresses or extends the elastic member 912 to implement vibration absorption.

In some examples, the dynamic vibration absorber 910 is configured to vibrate along the left and right direction of the grip 120, and elastic members 912 are disposed on both a left side of the resonant member 911 and a right side of the resonant member 911. In some examples, the dynamic vibration absorber 910 is configured to vibrate along the up and down direction of the grip 120, and the elastic members 912 are disposed on both an upper side of the resonant member 911 and a lower side of the resonant member 911.

A mounting member 160 is disposed on the inner wall of the grip 120, and an end of the elastic member 912 away from the resonant member 911 is connected to the mounting member 160. The mounting member 160 is provided to position the elastic member 912, thereby preventing displacement of the elastic member 912. In some examples, the mounting member 160 is a positioning slot into which the elastic member 912 is inserted. A bottom surface of the positioning slot is a smoothed end surface so that it is convenient for the positioning slot to mate with the elastic member 912. The positioning slot guides the elastic member 912 in the left and right direction and provides a certain supporting force for the elastic member 912 in the up and down direction. In some examples, the mounting member 160 is a positioning boss on which the elastic member 912 is sleeved. In some examples, the mounting member 160 is the positioning slot into which the elastic member 912 is inserted, and a positioning boss on which the elastic member 912 is sleeved is provided in the positioning slot.

The resonant member 911 is a mass block, and the elastic member 912 is a spring. The mass block has a slot 9111 into which the spring is inserted, and a boss 9112 on which the spring is sleeved is provided in the slot 9111. The slot 9111 mates with the boss 9112 to better position the elastic member 912. Specifically, the mass block is in the shape of a rectangular cuboid, and the spring is a cylindrical spiral compression spring. All parameters of two springs located on two sides of the mass block are identical, and two ends of each of the springs are smoothed. The springs are compressed between the housing 100 and the mass block with certain preload forces.

The vibration is transmitted from the power mechanism 200 in the front portion 110 to the grip 120. The vibration is transferred to the mass block through the springs. The mass block generates an inertial force opposite to a vibration direction of the housing 100, and the inertial force acts on the housing 100 to reduce the structural vibration and dissipate energy. Thus, vibration response of the grip 120 is attenuated and controlled.

The preceding technical solutions may be freely combined when there is no contradiction.

The present application has at least the effects described below. The output assembly includes the first output shaft and the second output shaft. The first output shaft is configured to be mounted with and drive the first attachment, and the second output shaft is configured to be mounted with and drive the second attachment. The motor shaft drives the first output shaft and the second output shaft. The first attachment or the second attachment is replaced and used so that the various functions such as the long-distance cutting, the short-distance cutting, the polishing, and the grinding can be implemented. In addition, at least one of the first output shaft and the second output shaft is substantially parallel to the motor shaft, thereby making the structure compact, saving the space, reducing the volume of the entire machine, optimizing the center of gravity of the entire machine, and improving the hand feel of the user during use.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A multi-function power tool, comprising:
a housing comprising a front portion and a grip; and
a power mechanism comprising an output assembly and an electric motor;
wherein the output assembly comprises a first output shaft and a second output shaft, the first output shaft is configured to be mounted with and drive a first attachment, the second output shaft is configured to be mounted with and drive a second attachment, the electric motor has a motor shaft that drives the first output shaft and the second output shaft, and at least one of the first output shaft and the second output shaft is substantially parallel to the motor shaft.

2. The multi-function power tool according to claim 1, wherein the motor shaft, the first output shaft, and the second output shaft are substantially parallel.

3. The multi-function power tool according to claim 2, wherein the motor shaft, the first output shaft, and the second output shaft extend toward a same side of the housing.

4. The multi-function power tool according to claim 1, wherein the electric motor is disposed in the front portion.

5. The multi-function power tool according to claim 1, wherein the grip has a grip axis, and the motor shaft is substantially perpendicular to the grip axis.

6. The multi-function power tool according to claim 1, wherein the first output shaft and the second output shaft are distributed on a front side of the motor shaft and a rear side of the motor shaft along a front and rear direction of the housing.

7. The multi-function power tool according to claim 1, wherein the power mechanism further comprises a first transmission assembly, and the motor shaft transmits power to the first output shaft through the first transmission assembly.

8. The multi-function power tool according to claim 7, wherein the power mechanism further comprises a second transmission assembly, and the motor shaft transmits power to the second output shaft through the second transmission assembly.

9. The multi-function power tool according to claim 8, wherein the power mechanism further comprises an intermediate shaft, the intermediate shaft is connected to the motor shaft, and the first transmission assembly and the second transmission assembly share the intermediate shaft.

10. The multi-function power tool according to claim 9, wherein the intermediate shaft comprises an eccentric shaft section and a concentric shaft section, the eccentric shaft section is eccentrically disposed relative to the motor shaft, the concentric shaft section is concentrically disposed with the motor shaft, the first transmission assembly is connected to the eccentric shaft section to convert rotation of the motor shaft into a swing of the first output shaft, and the second transmission assembly is connected to the concentric shaft section to convert rotation of the motor shaft into rotation of the second output shaft.

11. The multi-function power tool according to claim 1, wherein the first output shaft is an oscillating output shaft, and/or the second output shaft is a rotating output shaft.

12. The multi-function power tool according to claim 1, wherein the second attachment is a circular saw attachment.

13. The multi-function power tool according to claim 1, further comprising a quick clamping mechanism, wherein the quick clamping mechanism is operable by a user to detach or mount the first attachment.

14. The multi-function power tool according to claim 1, wherein a height of the front portion along an up and down direction of the housing is less than or equal to 110 cm, and an outer diameter of the electric motor is greater than or equal to 32 cm and less than or equal to 48 cm.

15. The multi-function power tool according to claim 1, wherein the housing further comprises a rear portion, the front portion, the grip, and the rear portion are disposed in sequence along a front and rear direction, the multi-function power tool further comprises a circuit board assembly, and the circuit board assembly is disposed in the front portion or the rear portion.

16. A multi-function power tool, comprising:
a housing comprising a front portion and a grip; and
a power mechanism comprising an output assembly and an electric motor;
wherein the electric motor is disposed in the front portion, the output assembly comprises a first output shaft and a second output shaft, the first output shaft is configured to be mounted with and drive a first attachment, the second output shaft is configured to be mounted with and drive a second attachment, and the electric motor has a motor shaft that drives the first output shaft and the second output shaft.

17. The multi-function power tool according to claim 16, wherein an included angle between the first output shaft and the motor shaft is 3° to 30°.

18. A multi-function power tool, comprising:
a housing comprising a front portion and a grip; and
a power mechanism comprising an output assembly and an electric motor;
wherein the output assembly comprises a first output shaft and a second output shaft, the first output shaft is an oscillating output shaft and is configured to be mounted with and drive a first attachment, the second output shaft is configured to be mounted with and drive a second attachment, the electric motor has a motor shaft that drives the first output shaft and the second output shaft, a transmission ratio from the motor shaft to the first output shaft is defined as a first transmission ratio, a transmission ratio from the motor shaft to the second output shaft is defined as a second transmission ratio, and a ratio of the first transmission ratio to the second transmission ratio is greater than or equal to 2.5 and less than or equal to 4.5.

19. The multi-function power tool according to claim 18, wherein a ratio of an output efficiency of the first output shaft to an output efficiency of the second output shaft is greater than or equal to 0.9 and less than or equal to 1.35.

20. The multi-function power tool according to claim 18, wherein a width of the grip along a left and right direction of the housing is less than or equal to 48 cm, and/or a height of the grip along an up and down direction of the housing is less than or equal to 64 cm.
